# FASCICULE DE BREVET EUROPEEN

(11) **EP 4 165 317 B1**
(45) Date de publication et mention de la délivrance du brevet: **24.04.2024**
(21) Numéro de dépôt: 21737717.5
(22) Date de dépôt: 08.06.2021
(51) Int. Cl.: F16D 55/226, F16D 55/2265

(54) **FREIN A DISQUE EQUIPE D'UNE PIECE AUTONOME DE PROTECTION D'UN CONNECTEUR ELECTRIQUE DE MOTOREDUCTEUR**
SCHEIBENBREMSE MIT EINEM EIGENSTÄNDIGEN SCHUTZTEIL FÜR EINEN ELEKTRISCHEN VERBINDER EINES GETRIEBEMOTORS
DISC BRAKE EQUIPPED WITH A SELF-CONTAINED PART FOR PROTECTING AN ELECTRICAL CONNECTOR OF A GEAR MOTOR

(30) Priorité: 10.06.2020 FR 2006074
(43) Date de publication de la demande: 19.04.2023
(73) Titulaire: Hitachi Astemo France, 93700 Drancy (FR)
(72) Inventeur: JAMAULT, Philippe, 91330 Yerres (FR); PINTO, Rosa, 94500 Champigny sur Marne (FR); POIRIER, Nicolas, 77230 Dammartin en Goële (FR); YOSHIDA, Nobuyasu, 78100 Saint Germain en Laye (FR)
(74) Mandataire: Brevalex
(86) Numéro de dépôt international: PCT/FR2021/051026
(87) Numéro de publication internationale: WO 2021/250349

(56) Documents cités:
- WO-A1-2007/107398
- WO-A1-2020/004524
- FR-A1- 3 038 673
- US-A1- 2019 323 570
- US-B2- 8 905 201

## Description

L'invention se rapporte à un frein à disque comprenant une pièce autonome de protection d'un connecteur électrique d'un motoréducteur intégré au frein.

Certains freins sont équipés d'un motoréducteur monté sur l'enveloppe du frein proprement dit. L'alimentation du moteur électrique se fait par un connecteur électrique saillant hors du boîtier du motoréducteur. Ce connecteur électrique est une pièce peu résistante, et vulnérable aux chocs pouvant être produits accidentellement par des projections de cailloux, de gravillons, par des accumulations de boue, de glace sur la roue à la mauvaise saison, et que la rotation de la roue amène au frein, ou encore par des maladresses aux montages ou aux démontages de la roue ou du frein. On s'est donc préoccupé de protéger ce connecteur.

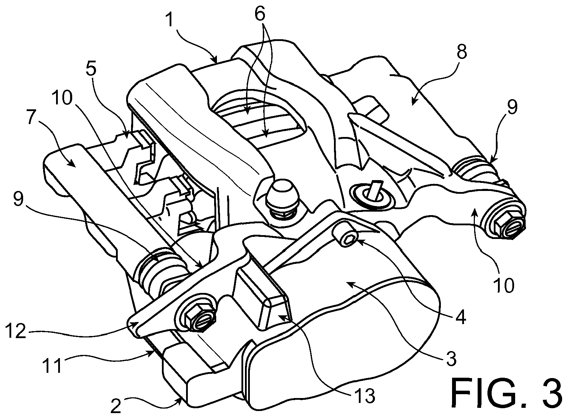

Dans une conception existante, représentée à la figure 3, on a représenté un frein à disque et à étrier flottant dont un étrier porte la référence 1, un motoréducteur la référence 2, et où un boîtier 3 du motoréducteur 2 est monté sur une face de l'enveloppe de l'étrier 1 par des vis 4. Le frein comporte encore une chape 5 de guidage des mouvements de patins 6 actionnés par l'étrier 1. La chape 5 comprend notamment deux colonnettes 7 et 8 parallèles de part et d'autre de l'étrier 1 à deux bords latéraux du frein et qui s'étendent presque jusqu'au motoréducteur 2. L'enveloppe de l'étrier 1 a une forme complexe, d'autant plus qu'elle comporte des pattes de liaison 10 qui font saillie dans des directions latérales opposées pour recevoir des tiges filetées 9 dépassant des colonnettes 7 et 8 et relier ainsi l'étrier 1 à la chape 5. Or, le motoréducteur 2 comprend un connecteur électrique 11 saillant à l'extérieur du boîtier 3, et à un bord latéral du frein en étant adjacent à la partie de l'étrier 1 proche de la face de montage du motoréducteur 2, et aussi adjacent à la tige filetée 9 de l'une des colonnettes 7 et à la patte de liaison 10 associée.

La protection du connecteur électrique 11, avantageuse voire nécessaire contre les risques de chocs, peut être assurée, d'après l'art connu, par un prolongement 12 en direction latérale du frein (perpendiculairement aux colonnettes 7 et 8) de la patte de liaison 10 associée à la colonnette 7, afin de couvrir directement le connecteur électrique 11 et de le protéger de certains chocs ; un autre dispositif de protection du connecteur électrique 11 est constitué par une masselotte 13, établie en saillie sur la patte de liaison 10, de forme élancée et s'allongeant dans la direction des colonnettes 7 et 8 à hauteur du connecteur 11, et ici à hauteur aussi du boîtier 3. Sa fonction est de briser les accumulations de boue, de glace qui pourraient atteindre le connecteur électrique 11 pendant le mouvement de la roue qu'épuipe le frein.

La masselotte 13 et le prolongement 12 de la patte de liaison 10 compliquent encore le dessin de l'enveloppe de l'étrier 1. Comme celle-ci doit généralement être construite par moulage, l'extension d'une des pattes de liaison 10, imposée par la masselotte 13 dans la direction d'extension des colonnettes 7 et 8 et par le prolongement 12 dans la direction latérale, amène des difficultés de fabrication importantes à cause des risques de défaut de coulée de cette partie irrégulière, longue et assez fine de l'enveloppe. La nécessité de protéger le connecteur électrique 11 des chocs se traduit donc par une conception défavorable de l'enveloppe de l'étrier 1.

Le document WO 2007/107 398 A1 décrit un frein avec un motoréducteur muni d'un connecteur électrique,

Certains documents (US 2019/0 303 570 A1, FR 3038 631 A1 et WO 2020/004 524 A1) décrivent des freins dans lesquels les connecteurs sont protégés par des capots qui les enveloppent. De tels capots sont assez encombrants et lourds, et il faut ajouter des vis pour les assembler au reste du frein. Le dessin du frein en est compliqué.

On a donc cherché avec l'invention à remédier à cet inconvénient, en protégeant le connecteur électrique d'une autre manière et en revenant à une construction facile et économique de l'enveloppe de l'étrier.

Un aspect général de l'invention est un frein à disque comprenant une enveloppe extérieure d'étrier fabriquée par moulage, un motoréducteur fixé à l'enveloppe et comprenant un connecteur électrique qui s'étend hors d'un boîtier du motoréducteur et hors de l'enveloppe, une chape de guidage de patins de freinage, la chape comprenant des colonnettes parallèles, le connecteur électrique étant adjacent à une des colonnettes, les colonnettes contenant des tiges saillant d'une de leurs extrémités, l'enveloppe comprenant des pattes de liaison recevant les tiges de manière à relier l'étrier à la chape, comprenant une pièce de protection fabriquée séparément de l'enveloppe et du boîtier, fixée au frein et couvrant le connecteur électrique sur un trajet potentiel de corps extérieurs, tels des cailloux, de la boue ou de la glace, susceptibles de heurter le connecteur électrique, la tige de ladite une des colonnettes étant munie par rapport à la tige des autres colonnettes, d'un prolongement, dirigé vers le motoréducteur, et la pièce de protection du connecteur électrique est montée sur ledit prolongement, caractérisé en ce que ledit prolongement s'étend à hauteur du connecteur électrique en direction de longueur de la tige.

L'enveloppe de l'étrier est donc plus facile à produire par moulage. En étant fabriquée séparément de l'enveloppe, la pièce de protection peut beaucoup plus facilement être dotée de toute forme avantageuse pour accomplir sa fonction. Il n'est en particulier par indispensable qu'elle soit fabriquée par moulage : il peut s'agir au contraire d'une pièce métallique rigide (ou en une autre matière), découpée, déformée ou usinée par un procédé quelconque connu pour lui conférer sans difficulté de fabrication une forme éventuellement compliquée, et choisie pour couvrir au mieux le connecteur électrique. Un autre point important de l'invention est que la tige équipant une des colonnettes est exploitée pour servir à la fixation de la pièce de protection, en prolongeant un peu cette tige : l'augmentation de poids due au support est très réduite.

La pièce protectrice est, dans une réalisation importante de l'invention, un tube qu'on engage sur la tige filetée, par exemple par vissage ; dans une autre réalisation importante, il comprend une bande rigide de forme sinueuse, conformée pour couvrir au mieux le connecteur, et qui peut encore être vissée ou boulonnée à la tige filetée.

Dans ce dernier cas, la bande rigide comprend avantageusement une première branche qui s'étend contre le boîtier en s'éloignant de l'enveloppe à partir d'un lieu de fixation à la tige filetée, les corps extérieurs contre lesquels on envisage de se protéger étant des accumulations de boue, de glace susceptibles d'être entraînées ou projetées par une roue de véhicule équipée du frein.

Elle peut tout aussi avantageusement comprendre une branche s'approchant du connecteur électrique à partir de la tige filetée, puis comprenant au moins un repli parallèle aux colonnettes s'étendant devant le connecteur électrique, de manière à couvrir une surface complète devant le connecteur. Elle peut aussi avantageusement être une pièce unique comprenant deux branches divergeant d'un emplacement commun de fixation au frein et conformes à ce qui précède.

La pièce de protection conforme à l'invention pourra donc prendre des formes et des aspects très divers, tout en se distinguant d'autres pièces ou équipements rapportés sur le frein par vissage ou autrement en ce qu'elle est une structure rigide et inerte, sans autre fonction que de couvrir le connecteur électrique, soit en s'étendant directement devant lui, soit à une certaine distance quand le trajet du corps responsable d'un choc peut être prévu, comme pour un bloc de boue, de glace entraîné par la roue.

L'invention sera maintenant plus complètement décrite au moyen de certaines de ses réalisations effectives et non limitatives, représentées sur les figures suivantes, qui explicitent ses caractéristiques, aspects et avantages :
Figure 1 une première réalisation de l'invention ;
Figure 2 une deuxième réalisation de l'invention ;
Figure 3 déjà décrite, une conception connue de protection du connecteur.

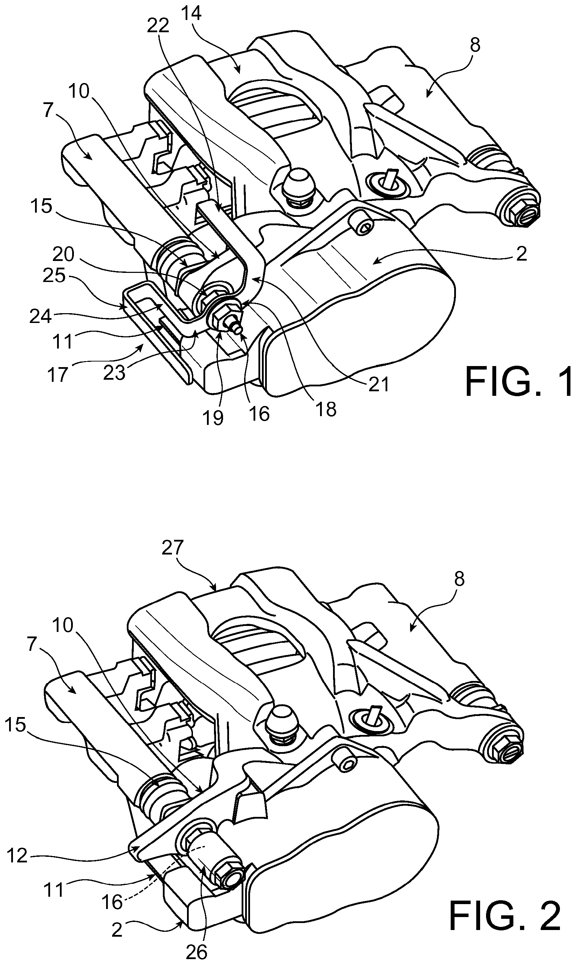

On passe au commentaire de la figure 1. Plusieurs des constituants du frein à disque à étrier flottant de la figure 3 se retrouvent ici. C'est notamment le cas de la chape 5 porteuse des deux colonnettes 7 et 8, de l'étrier doté des pattes de liaison 10 à des tiges filetées associées aux colonnettes et dépassant d'elles, et du motoréducteur 2 monté sur une face de l'étrier adjacente aux pattes de liaison 10. Sauf indication contraire ci-dessous, la description de la figure 3 reste valable pour les réalisations de l'invention qu'on va décrire. L'enveloppe de l'étrier, maintenant référencé par 14, diffère toutefois de l'enveloppe de l'étrier 1 en ce que la masselotte 13 et le prolongement 12 de la patte de liaison 10 sont maintenant omis. Les pattes de liaison 10 deviennent alors identiques et symétriques. La tige filetée, maintenant référencée par 15, de la colonnette 7 adjacente au connecteur 11, diffère de la précédente par un prolongement fileté 16 s'étendant vers le motoréducteur 2 ; ce prolongement fileté 16 s'étend à hauteur du motoréducteur 2 et du connecteur 11 dans la direction de longueur de la tige filetée 15 et de la colonnette 7. La tige filetée (9) de l'autre colonnette 8 n'est pas modifiée et est donc plus courte que la tige filetée 15.

Une bande métallique sinueuse et rigide forme ici la pièce de protection 17 du connecteur 11. Elle comprend un oeillet 18 qui est enfilé dans le prolongement 16 de la tige filetée 15. Un écrou 19 est vissé sur le prolongement 16 et retient la pièce de protection 17 contre un écrou 20 déjà présent dans le frein connu, vissé sur la colonnette 15 pour l'immobiliser sur la patte de liaison 10.

La pièce de protection 17 comprend deux branches de part et d'autre de l'œillet 18. Une des branches 21 s'étend d'abord perpendiculairement à la tige filetée 15 en s'éloignant du connecteur électrique 11, puis, après un coude, parallèlement à la tige filetée 15 en formant une barrette 22 qui s'étend au-dessus de la patte de liaison 10 (en la croisant) et à hauteur du connecteur 11 d'après la direction des colonnettes 7 et 8. La barrette 22 parallèle aux colonnettes 7 et 8 sert de brise-glace. On voit qu'elle peut facilement être disposée à un autre emplacement que la masselotte 13, aussi bien dans la direction des colonnettes 7 et 8 que dans une direction perpendiculaire à elles et à la direction principale d'extension de la patte de liaison 10 : elle peut donc être disposée nettement à distance de cette dernière, si cela est avantageux. La branche 23 opposée à la branche 21 s'étend elle aussi d'abord perpendiculairement à la direction des colonnettes 7 et 8 mais vers le connecteur électrique 11, puis elle comprend, après un coude, un premier repli 24, puis un second repli 25 après un double coude à angle droit. Les replis 24 et 25 sont parallèle aux colonnettes 7 et 8 et en face l'un de l'autre, et ils couvrent toute une surface de protection du connecteur électrique 11 à l'emplacement du prolongement 12, mais avec une extension plus large que lui dans la direction des colonnettes 7 et 8 et donc une meilleure efficacité.

Dans une autre réalisation possible de l'invention, représentée à la figure 2, on retrouve, équipant la colonnette 7, la tige filetée 15 munie du prolongement 16, et celui-ci est occupé par un tube de protection 26 taraudé qui lui est vissé, prolonge lui aussi la tige filetée 15 en s'étendant approximativement à hauteur du connecteur 11 (ici, aussi à hauteur du boîtier 3), et il protège le connecteur 11 grâce à sa rigidité et son volume assez important en servant de brise-glace. La masselotte 13 reste donc omise dans l'enveloppe de l'étrier, maintenant 27, de ce mode de réalisation. Mais la patte de liaison 10 comprend encore le prolongement 12 de la figure 3 pour continuer à protéger le connecteur électrique 11 d'autres chocs. L'avantage de ce mode de réalisation est qu'il permet encore de supprimer la masselotte 13, qui est plus pesante et plus nuisible au moulage que le prolongement 12, et que le tube de protection 26 est peut-être plus économique et plus léger que la pièce de protection 17 de forme complexe.

La pièce autonome de protection peut être réalisée de bien d'autres façons, par exemple formée d'un profilé, d'une tige, d'une plaquette, d'une grille, etc. Elle est soit unitaire, soit composée d'une pluralité de pièces distinctes.

Quant au frein, il peut être de genre quelconque, et par exemple un frein dynamique ou un frein de stationnement.

L'emplacement de la pièce de protection ou des pièces de protection autonomes pourra être différent sur le frein, d'après la position du connecteur électrique et la position et l'orientation du frein dans le véhicule, qui déterminent les trajets prévisibles des corps potentiellement responsables de chocs ; les pièces de protection s'étendent, dans les réalisations importantes représentées ici, sur la face du frein opposée aux patins 6.

### Nomenclature

1 Etrier
2 Motoréducteur
3 Boîtier de motoréducteur
4 Vis
5 Chape
6 Patins
7 Colonnette
8 Colonnette
9 Tiges filetées
10 Pattes de liaison
11 Connecteur électrique
12 Prolongement
13 Masselotte
14 Etrier
15 Tige filetée
16 Prolongement
17 Pièce de protection
18 Oeillet
19 Ecrou
20 Ecrou
21 Branche de la pièce de protection
22 Barrette
23 Branche de la pièce de protection
24 Premier repli
25 Second repli
26 Tube de protection
27 Etrier

## Revendications

1. Frein à disque comprenant une enveloppe extérieure d'étrier (14, 27) fabriquée par moulage, un motoréducteur (2) fixé à l'enveloppe et comprenant un connecteur électrique (11) qui s'étend hors d'un boîtier (3) du motoréducteur et hors de l'enveloppe, une chape (5) de guidage de patins (6) de freinage, la chape comprenant des colonnettes (7, 8) parallèles, le connecteur électrique (11) étant adjacent à une des colonnettes (7), les colonnettes contenant des tiges (15, 9) saillant d'une de leurs extrémités, l'enveloppe comprenant des pattes de liaison (10) recevant les tiges (15, 9) de manière à relier l'étrier (14, 27) à la chape (5), comprenant une pièce de protection (17, 26) fabriquée séparément de l'enveloppe et du boîtier, fixée au frein et couvrant le connecteur électrique sur un trajet potentiel de corps extérieurs, tels des cailloux, de la boue ou de la glace, susceptibles de heurter le connecteur électrique, la tige (15) de ladite une des colonnettes (7) étant munie, par rapport à la tige (9) des autres colonnettes (8), d'un prolongement (16), dirigé vers le motoréducteur (2) et la pièce de protection du connecteur électrique est montée sur ledit prolongement (16), **caractérisé en ce que** ledit prolongement s'étend à hauteur du connecteur électrique en direction de longueur de la tige (15).

2. Frein selon la revendication 1, **caractérisé en ce que** la pièce de protection du connecteur électrique est un tube (26) engagé sur le prolongement (16) de la tige (15).

3. Frein selon la revendication 1, **caractérisé en ce que** la pièce de protection (17) du connecteur électrique comprend une bande rigide.

4. Frein selon la revendication 3, **caractérisé en ce que** la bande rigide est sinueuse et comprend au moins un coude.

5. Frein selon la revendication 4, **caractérisé en ce que** la bande rigide comprend une branche (21) s'éloignant du connecteur électrique (11) à partir de la tige filetée, puis comprenant une barrette (22) parallèle aux colonnettes (7, 8).

6. Frein selon la revendication 4, **caractérisé en ce que** la bande rigide comprend une branche (23) s'approchant du connecteur électrique (11) à partir de la tige, puis comprenant au moins un repli (24, 25) parallèle aux colonnettes (7, 8) s'étendant devant le connecteur électrique (11).

## Patentansprüche

1. Scheibenbremse, umfassend eine durch Formen hergestellte Bremssattel-Außenumhüllung (14, 27), einen Getriebemotor (2), der an der Umhüllung befestigt ist und einen elektrischen Steckverbinder (11) umfasst, der sich aus einem Gehäuse (3) des Getriebemotors und aus der Umhüllung heraus erstreckt, ein Gabelgelenk (5) zum Führen von Bremsklötzen (6), wobei das Gabelgelenk parallele Säulen (7, 8) umfasst, wobei der elektrische Steckverbinder (11) neben einer der Säulen (7) liegt, wobei die Säulen Stangen (15, 9) enthalten, die an einem ihrer Enden hervorstehen, wobei die Umhüllung Verbindungsstege (10) umfasst, die die Stangen (15, 9) aufnehmen, um den Bremssattel (14, 27) mit dem Gabelgelenk (5) zu verbinden, und ein Schutzteil (17, 26) umfasst, das getrennt von der Umhüllung und vom Gehäuse hergestellt wurde, an der Bremse befestigt ist und den elektrischen Steckverbinder auf einem potenziellen Weg von Fremdkörpern wie Steinen, Schlamm oder Eis abdeckt, die auf den elektrischen Steckverbinder treffen könnten, wobei die Stange (15) der einen der Säulen (7) in Bezug auf die Stange (9) der anderen Säulen (8) mit einer zum Getriebemotor (2) gerichteten Verlängerung (16) versehen ist und das Schutzteil des elektrischen Steckverbinders an der Verlängerung (16) montiert ist, **dadurch gekennzeichnet, dass** sich die Verlängerung auf Höhe des elektrischen Steckverbinders in Längsrichtung der Stange (15) erstreckt.

2. Bremse nach Anspruch 1, **dadurch gekennzeichnet, dass** das Schutzteil des elektrischen Steckerverbinders ein Rohr (26) ist, das auf die Verlängerung (16) der Stange (15) aufgesteckt wird.

3. Bremse nach Anspruch 1, **dadurch gekennzeichnet, dass** das Schutzteil (17) des elektrischen Steckerverbinders ein starres Band umfasst.

4. Bremse nach Anspruch 3, **dadurch gekennzeichnet, dass** das starre Band gewunden ist und mindestens eine Krümmung umfasst.

5. Bremse nach Anspruch 4, **dadurch gekennzeichnet, dass** das starre Band einen Schenkel (21) umfasst, der sich vom elektrischen Steckverbinder (11) von der Gewindestange entfernt, und dann einen Stab (22) umfasst, der parallel zu den Säulen (7, 8) verläuft.

6. Bremse nach Anspruch 4, **dadurch gekennzeichnet, dass** das starre Band einen Schenkel (23) umfasst, der sich von der Stange dem elektrischen Steckverbinder (11) nähert, und dann mindestens eine Biegung (24, 25) parallel zu den Säulen (7, 8) umfasst, die sich vor dem elektrischen Steckverbinder (11) erstreckt.

## Claims

1. A disc brake comprising an outer envelope of a calliper (14, 27) manufactured by moulding, a gear motor (2) fastened to the envelope and comprising an electrical connector (11) which extends out of a casing (3) of the gear motor and outside the envelope, a yoke (5) for guiding brake pads (6), the yoke comprising parallel pin-guides (7, 8), the electrical connector (11) being adjacent to one of the pin-guides (7), the pin-guides containing rods (15, 9) protruding from one of the ends thereof, the envelope comprising connecting tabs (10) receiving the rods (15, 9) so as to connect the calliper (14, 27) to the yoke (5), comprising a protective part (17, 26) manufactured separately from the envelope and the casing, fastened to the brake and covering the electrical connector on a potential path of external bodies, such as stones, mud or ice, likely to strike the electrical connector, the rod (15) of said one of the pin-guides (7) being provided, relative to the rod (9) of the other pin-guides (8), with an extension (16), directed towards the gear motor (2) and the protective part of the electrical connector is mounted on said extension (16), **characterised in that** said extension extends to the height of the electrical connector in the direction of the length of the rod (15).

2. The brake according to claim 1, **characterised in that** the protective part of the electrical connector is a tube (26) engaged on the extension (16) of the rod (15).

3. The brake according to claim 1, **characterised in that** the protective part (17) of the electrical connector comprises a rigid strip.

4. The brake according to claim 3, **characterised in that** the rigid strip is sinuous and comprises at least one bend.

5. The brake according to claim 4, **characterised in that** the rigid strip comprises a branch (21) away from the electrical connector (11) from the threaded rod, then comprising a bar (22) parallel to the pin-guides (7, 8).

6. The brake according to claim 4, **characterised in that** the rigid strip comprises a branch (23) approaching the electrical connector (11) from the rod, then comprising at least one fold (24, 25) parallel to the pin-guides (7, 8) extending in front of the electrical connector (11).
